Europäisches Patentamt

European Patent Office

Office européen des brevets

(19)

(11) **EP 0 898 818 B1**

(12) **EUROPÄISCHE PATENTSCHRIFT**

(45) Veröffentlichungstag und Bekanntmachung des Hinweises auf die Patenterteilung:
**24.07.2002 Patentblatt 2002/30**

(21) Anmeldenummer: **97923813.6**

(22) Anmeldetag: **14.05.1997**

(51) Int Cl.⁷: $H04L\ 1/00$

(86) Internationale Anmeldenummer:
**PCT/DE97/00971**

(87) Internationale Veröffentlichungsnummer:
**WO 97/43841 (20.11.1997 Gazette 1997/50)**

(54) **VERFAHREN ZUR ÜBERTRAGUNG VON INFORMATION**

PROCESS FOR TRANSMITTING DATA

PROCEDE DE TRANSMISSION D'INFORMATIONS

(84) Benannte Vertragsstaaten:
**AT BE CH DE DK ES FI FR GB IT LI NL PT SE**

(30) Priorität: **14.05.1996 DE 19619389**

(43) Veröffentlichungstag der Anmeldung:
**03.03.1999 Patentblatt 1999/09**

(73) Patentinhaber:
• **TTH AG**
  **3013 Bern (CH)**
  Benannte Vertragsstaaten:
  **DE**
• **IP2H AG**
  **3013 Bern (CH)**
  Benannte Vertragsstaaten:
  **BE CH DK ES FI FR GB IT LI NL PT SE AT**

(72) Erfinder: **ARNOLD, Jörg**
  **D-69117 Heidelberg (DE)**

(74) Vertreter: **Naumann, Ulrich, Dr.-Ing. et al**
  **Patentanwälte,**
  **Ullrich & Naumann,**
  **Luisenstrasse 14**
  **69115 Heidelberg (DE)**

(56) Entgegenhaltungen:
  **EP-A- 0 464 014        EP-A- 0 663 785**
  **WO-A-92/22158        WO-A-95/01682**

  • **SCHNUPP, PETER: "Rechnernetze", 1978, W. DE GRUYTER, BERLIN UND NEW YORK**

EP 0 898 818 B1

## Beschreibung

Die Erfindung betrifft ein Verfahren zur Übertragung von Information in Form digital kodierter Funksignale, wobei die Funksignale neben dem Informationsteil einen Protokollteil umfassen.

Verfahren der in Rede stehenden Art sind seit vielen Jahren aus der Praxis bekannt, siehe z.B. die Druckschrift EP-A-0 663 785. Diese bekannten Verfahren finden ihre Anwendung bspw. in den C-, D1-, D2- und E-plus-Mobilfunknetzen. Die beispielhaft genannten Mobilfunknetze weisen typischerweise feste Funkeinrichtungen und ein externes Funknetzmanagement hinsichtlich des Vermittlungsverfahrens zur Funkübertragung in den Mobilfunknetzen auf. Das Übertragungsverfahren wird im wesentlichen von einer externen Betreiberstelle - bspw. einem zentralen Betriebsrechner - außerhalb der einzelnen Funkendgeräte gesteuert. Dadurch werden sowohl die Mobilfunkgeräte der Funknetzwerke als auch die festen Funkeinrichtungen wie bspw. Basisfunkstationen oder Übertragungsrelaisstationen der einzelnen festen Funknetzzellen dieser Funknetze extern beeinflußt.

Bei der in den bekannten Funknetzwerken üblichen Übertragung von Information in Form digital kodierter Funksignale wird die zu übertragende Information bei jeder Übertragung durch ein Übertragungsrelais aufgenommen bzw. empfangen und zunächst im Rahmen einer Informationsverarbeitung bearbeitet und erst nach dieser Bearbeitung weitergesendet bzw. übertragen. Für die Bearbeitung umfassen die Funksignale neben dem Informationsteil einen Protokollteil in Form bspw. eines Übertragungsprotokolls. Eine derartige Bearbeitung kann auch eine Fehlerprüfung und Fehlerkorrektur der empfangenen Funksignale umfassen.

Insbesondere bei langen Funkstrecken sind für die Übertragung der Information viele Übertragungsrelais erforderlich. Bei jedem Übertragungsrelais findet dann eine protokollgemäße Bearbeitung der Funksignale statt. Die Übertragungsgeschwindigkeit bzw. die Übertragungsdauer der Funksignale wird damit wesentlich durch die sich addierenden Bearbeitungszeiten in den einzelnen Relais bestimmt. Die reine Funksignalausbreitungsgeschwindigkeit bzw. Funksignallaufzeit tritt gegen die Bearbeitungszeit deutlich in den Hintergrund. Bei vielen Anwendungen der Informationsübertragung, insbesondere bei einer Sprachübertragung, sind derartige relaisbedingte Übertragungsverzögerungen im Hinblick auf die Übertragungsqualität sehr ungünstig.

Der vorliegenden Erfindung liegt daher die Aufgabe zugrunde, ein Verfahren der eingangs genannten Art anzugeben, wonach eine qualitativ hochwertige Informationsübertragung ermöglicht ist.

Erfindungsgemäß wird die voranstehende Aufgabe durch ein Verfahren mit den Merkmalen des Patentanspruches 1 gelöst. Danach ist das in Rede stehende Verfahren derart ausgestaltet, daß die Übertragung des Informationsteils vor, während oder zeitgleich mit der Bearbeitung des Protokollteils in einem Übertragungsrelais begonnen wird.

In erfindungsgemäßer Weise ist erkannt worden, daß eine Änderung der bisher bekannten Reihenfolge von zunächst einer Protokollbearbeitung und anschließend einer Informationsübertragung einen erheblichen Zeitgewinn bei der Übertragung von Information in Form digital kodierter Funksignale ergibt. Hierzu wird die Übertragung des Informationsteils bereits vor, während oder auch zeitgleich mit der Bearbeitung des Protokollteils in einem Übertragungsrelais begonnen. Der sich aus der erfindungsgemäßen Wahl der Abfolge von Informationsteilübertragung und Protokollteilbearbeitung ergebende Zeitgewinn führt bei der Übertragung von Information, insbesondere bei einer Sprachübertragung, zu einer deutlichen Qualitätsverbesserung. Bei entsprechend schneller Weiterleitung des Funksignals durch ein Übertragungsrelais reduziert sich die Übertragungsdauer in Richtung reine Funksignallaufzeit.

Das erfindungsgemäße Verfahren findet seine Anwendung nicht nur innerhalb der bekannten Mobilfunknetzwerke mit zentralem Funknetzmanagement, sondern auch bei dezentralen Relaisfunknetzen, bspw. dem in der deutschen Patentanmeldung 195 35 021.9 beschriebenen dezentralen Relaisfunknetz, welches einzelne Mobilfunkendgeräte und Mobilfunkrelais aufweist, wobei die Mobilfunkendgeräte ebenfalls als Mobilfunkrelais und umgekehrt dienen. Zur Durchführung des Verfahrens weisen die Mobilfunkendgeräte bzw. Mobilfunkrelais elektronische Prozessoren und Speicher auf, wodurch das Endteilnehmerschnittstellenverhalten und das Relaisverhalten dieser Geräte gesteuert ist.

Im Hinblick auf eine schnelle Informationsübertragung ist es besonders vorteilhaft, wenn die für die Übertragung der Information erforderliche Funkverbindung bereits vor der Übertragung aufgebaut wird. Dadurch ist eine Trennung zwischen dem Aufbau der Funkverbindung und der eigentlichen Informationsübertragung realisiert. Der Übertragungsvorgang kann somit ohne eine durch einen Verbindungsaufbau bedingte Zeitverzögerung erfolgen.

Die für eine Identifikation und Adressierung einer zu übertragenden Information bei herkömmlichen Verfahren erforderliche Informationsverarbeitung wird durch das Lesen der Sendeprotokollinformation, die das zu übermittelnde Informationspaket enthält, durchgeführt. Diese Information ist bei herkömmlichen Übertragungsverfahren ausschließlich zeitlich kodiert. Dabei ergibt die Art und Weise der zeitlichen Abfolge und des zeitlichen Verlaufs der digitalen Impulse die Schrift bzw. die Information.

Im Hinblick auf eine besonders einfache Übertragung des Informationsteils vor, während oder zeitgleich mit der Bearbeitung des Protokollteils könnte zusätzlich zu einer zeitlichen Kodierung eine Frequenzkodierung des Funksignals erfolgen. Die Frequenzkodierung könnte dabei zur Identifikation und Adressierung der zu übermittelnden Information verwendet werden. Dieser, die Identifikation und Adressierung der zu übermittelnden Information umfassende Protokollteil könnte besonders einfach im wesentlichen zeitgleich mit dem Informationsteil übertragen werden. Die Übertragung der Funksignale durch ein Übertragungsrelais könnte dadurch mit fast der reinen Funkausbreitungsgeschwindigkeit erfolgen, da die einzelnen Übertragungsrelais zur Identifikation und Adressierung der zu übertragenden Information lediglich einen Frequenzkode zu prüfen und zu verarbeiten haben und keine komplette Protokollverarbeitung durchführen müssen. Eine vollständige Protokollbearbeitung würde eine Übertragung wesentlich verlangsamen.

In besonders vorteilhafter Weise könnte die Information in Frequenztupel aus einzelnen Frequenzen kodiert werden. Dabei könnten die Frequenztupel n-Tupel sein.

Je nach Erfordernis könnten einzelne Frequenzen der Frequenztupel gleich Null sein und/oder könnten zwei oder mehrere Frequenzen innerhalb der Frequenztupel gleich sein.

In besonders einfacher Weise könnten als Frequenzen die Funkträgerfrequenzen für die Funksignale verwendet werden.

Bei einem unsynchronisierten Betreiben der Übertragungsrelais - bspw. im Rahmen des Funkverbindungsaufbaus bzw. Funkpfadaufbaus - bedingt die Relaisverzögerung, insbesondere bei der Verwendung sehr vieler Relais, den wesentlichen Teil der Signalübertragungszeit im Rahmen der Signalübertragung. Durch das erfindungsgemäße Verfahren - ein "First Talk Then Think" = F3T-Verfahren - läßt sich die resultierende Gesamtlaufzeitverzögerung der Funksignale auf nahezu die reine Funksignallaufzeit reduzieren. Jedes Relais sendet dann das ankommende, empfangene Informationspaket mit einer Phasenverschiebung simultan wieder ab und führt eine erforderliche Signalverarbeitung, bspw. im Rahmen der Sendeprotokollbearbeitung und -übergabe oder der Fehlerprüfung und Fehlerkorrektur, erst nach der eigentlichen Informationspaketübertragung aus.

Zur Vermeidung eines Übersprechens im Bereich der Übertragungsrelais könnte die Kodierung und/oder die Kodierungsform bzw. das Modulationsverfahren und/oder das Tastverfahren der Funkträgerfrequenz bzw. -frequenzen während der Dauer einer Funkverbindung in verschiedenen Funkverbindungsphasen verändert werden. Damit wäre die Möglichkeit gegeben, je nach Erfordernis zwischen Amplitudenmodulation und Frequenzmodulation bzw. -tastung zu wechseln. Hierbei könnte die Veränderung der Kodierung im wesentlichen die Frequenzkodierung betreffen. Im Übertragungsrelais laufen dann bspw. unterschiedliche Sendeoszillatoren auf vorgegebenen Frequenzkanälen im Leistungsleerlauf mit. Diese werden durch die Empfangsleistung aus dem ankommenden digitalen Funksignal elektronisch direkt auf die Relaissendeantenne durchgeschaltet und je nach Modulationsverfahren entsprechend umgetastet. Die simultan wieder abgestrahlten Signale sind dabei frequenzmäßig umgesetzt.

Zur Vermeidung einer aufwendigen Fehlerprüfung und Fehlerkorrektur kann die Übertragung der Information in störungsunempfindlicher Weise bitweise erfolgen. Dabei könnte jedem Informationsbit ein Frequenztupel zugeordnet werden. Nach seiner Integration bei dem Übertragungsrelais könnte das Informationsbit frequenzmäßig umgesetzt bzw. umgetastet und unverzüglich weitergesendet werden. Auch hierbei könnte die Frequenzkodierung bzw. der Frequenzkode zur Identifikation und Adressierung der Information verwendet werden. Des weiteren wäre eine Verwendung der Frequenzkodierung bzw. des Frequenzkodes zur Identifikation des Übertragungskanals denkbar. Ferner könnte die Frequenzkodierung bzw. der Frequenzkode auch zur Verschlüsselung der zu übertragenden Information verwendet werden.

Trotz der direkten Transmission ist noch eine gewisse Signalentstörung im Hinblick auf eine Rauschbefreiung erreicht. Falls das Durchschalten nach einem zeitlichen Integrationsprozeß durchgeführt wird, der auf die Einzelimpulsdauer der digitalen Funksignale angepaßt ist, können kürzere Störspitzen im Funksignal diskriminiert werden. Diese bedingen dann keine fehlerhafte Signalabstrahlung.

Bei dem obigen direkten Übertragungsmodus für die eigentliche Informationsübertragung werden nur definierte und direkt adressierte Zielübertragungsrelais im aufgeschalteten Funkpfad im F3T-Modus betrieben. Endteilnehmer der Funkverbindung werden nicht im F3T-Modus betrieben. Die Funksignale können dann nach der erfolgten direkten Übertragung der aufgenommenen Funksignale intern bearbeitet werden. Bei einer Erkennung von nicht ignorierbaren Fehlern kann die Übertragung des fehlerbefreiten Signals erneut durchgeführt werden.

Durch die erneute Übertragung kann es bei einem Betrieb im F3T-Modus zu einer Erhöhung der Funkaktivität im Funknetz kommen, da zunächst fehlerhafte Funksignale weitergegeben werden und anschließend - nach einer Fehlerkorrektur - zusätzlich fehlerbefreite Signale gesendet werden. Daneben werden die unsynchronisierten Relais, die im F3T-Modus betrieben werden, auch Funksignale, die nicht zu ihrem durch den bestehenden Funkpfad festgelegten Funkverkehr gehören, ggf. ungeprüft weitersenden. Dadurch können funkverbindungsfremde Funksignale anderer Funkverbindungen ggf. in die bestehende Funkverbindung übersprechen.

Die Endteilnehmer arbeiten - wie bereits erwähnt - nie im F3T-Modus. Daher ist das Übersprechen für die eigentliche Informationsübermittlung zwischen den Endteilnehmern einer Funkverbindung unwesentlich, da die Endteilnehmer die Zieladresse der digitalen Funkkodesequenz der übertragenen Informationspakete im Rahmen einer Protokollbearbeitung prüfen.

Ein Übersprechen erhöht jedoch die Funklast und betrifft deshalb die Funknetzkapazitätsproblematik und die Funkkollisionsproblematik im Funknetz und ist deshalb zu vermeiden.

Die in Frequenztupel kodierte Information könnte hierzu im Empfängerrelais in vorbestimmten Frequenzkanälen koinzident oder in einem bestimmten Zeitintervall erwartet werden und damit quasi die Funkverbindungstüren in der betrachteten bestehenden Funkverbindung aufschließen. Bisher dienen Mehrfrequenzverfahren zur Übertragung von digital kodierter Information wie bspw. die Frequenzumtastung ausschließlich zur Unterdrückung von Störeinflüssen auf die Funksignale.

Genauergesagt könnten die einzelnen Frequenzimpulse der Frequenztupel zur Vermeidung eines Übersprechens in einer vorgebbaren zeitlichen Abfolge innerhalb vorgebbarer Zeitfenster beim Übertragungsrelais und/oder beim Informationsempfänger erwartet bzw. empfangen werden. Gleichermaßen könnten die einzelnen Frequenzimpulse der Frequenztupel koinzident in einem vorgebbaren Zeitbereich beim Übertragungsrelais und/oder beim Informationsempfänger erwartet bzw. empfangen werden. Dadurch wären die Relais in gewisser Weise synchronisiert ("Slotted-F3T-Verfahren").

Bei der Funkaufnahmeprozedur wären dann bestimmte Zeitfenster unter den Relais vereinbart, in denen sie ausschließlich im F3T-Modus arbeiten. Fremde Informationspakete aus anderen berührenden Funkpfaden fallen ggf. aus dem Übertragungszeitfenster des F3T-Modus. Sie werden dann zuerst geprüft und ggf. nicht mehr weitergesendet.

Ein gemeinsamer Synchrontakt könnte durch einen einheitlichen Zeitstandard ermöglicht sein, den alle Relais über bspw. interne Funkuhren empfangen können. Eine fehlerhafte Synchronisation verlangsamt in diesem Falle lediglich die Signalübertragung, da die zu übertragenden Funksignale dann von den Relais zuerst geprüft und erst danach übermittelt werden.

Eine andere bzw. weitere Möglichkeit eines Schutzes vor einem Übersprechen im F3T-Modus könnte dadurch realisiert sein, daß das bzw. die für eine bestimmte Funkverbindung ausgewählten Übertragungsrelais und/oder der Informationsempfänger das Eintreffen der frequenzkodierten Information in vorbestimmten bzw. vorgebbaren Empfangsfrequenzkanälen erwarten bzw. empfangen. Dabei könnten die erwarteten Frequenztupel bzw. die Erwartungswerte hinsichtlich der Frequenzen der Frequenztupel der Funksignale für einen erneuten Empfang im Verlauf der Funksignalübertragung nach einem vorgebbaren Verfahren gewechselt werden. Gleichermaßen könnten die Frequenzen der Frequenztupel nach einem vorgebbaren Verfahren gewechselt werden. Dabei ist einerseits die Empfangsseite und andererseits die Sendeseite betrachtet.

Als besonders effektives Wechselverfahren bietet sich ein zyklisches Verfahren an. Dies könnte durch ein sog. Frequenzsprungzyklusverfahren erreicht werden, bei dem ein Relais nur auf ankommende Funksignale reagiert, deren Signalimpulse von einer ganz bestimmten erwarteten Folgefrequenz getragen werden. Die anfänglich beliebige Übertragungsfrequenz wird dabei im weiteren Funkverkehr durch das festgelegte zyklische Verfahren gewechselt.

Hierzu könnte das Wechselverfahren gemäß einer den Relais und dem Informationsempfänger zugeordneten Frequenztabelle durchgeführt werden. Eine derartige Tabelle könnte den Relais und/oder dem Informationsempfänger über einen Mikroprozessor implementiert sein.

Das Wechselverfahren könnte je nach Erfordernis für jedes Übertragungsrelais einer vorgebbaren Anzahl von Übertragungsrelais oder einer bestimmten Gruppe von Übertragungsrelais gleich sein. Alternativ hierzu könnte der Frequenzwahlzyklus auch bei allen Relais gleich sein. Wenn ein Relais eine initiale Funkübertragung mit einer bestimmten Funkfrequenz erhalten hat, so erwartet es die nächste Übertragung aus dieser Übertragungsrichtung mit einer ganz bestimmten Funkfrequenz entsprechend dem ggf. tabellarisch vorgegebenen Zyklus. Das zyklische Verfahren determiniert in der weiteren Abfolge des Funkverkehrs die gesamte Funkfrequenzkombination im gesamten Funkpfad für beide vorhandenen Übertragungsrichtungen, d.h. vom Sender zum Empfänger und umgekehrt. Diese Kombination ändert sich determiniert bei jeder folgenden Übertragung in der Funkverbindung.

Des weiteren könnten die vorbestimmten Frequenztupel für jedes Relais einer bestimmten Zahl von Relais oder einer bestimmten Gruppe von Relais aus einem anderen Frequenztupelwahlverfahren oder einem anderen Zyklusbereich bzw. Zyklusabschnitt des Frequenztupelwahlverfahrens stammen. Die Relais, die die empfangene Information weitergeben, könnten die empfangenen Funksignale dabei mit gewechselten Frequenztupeln weitergeben. Hierbei könnte in besonders einfacher Weise das Wechselverfahren der Frequenztupel zum Senden wie zum Empfangen für die entsprechenden Relaisgruppen das gleiche sein.

Die momentane Wahrscheinlichkeit w (Relaisübersprechwahrscheinlichkeit), daß ein Relais von einem Funksignal mit der erwarteten Funkfrequenz getroffen wird, das nicht aus der betrachteten Funkverbindung stammt, nimmt bei einer festen Funkaktivität unter einer Sendeleistungsanpassung mit

$$w = n^+/m^2$$

ab, wobei m die Anzahl der verwendeten Funkfrequenzkanäle des benutzten Übertragungsbandes und $n^+$ die Anzahl der nächsten Nachbarn, die senden können, ist. Dies ist die Wahrscheinlichkeit, mit der zwei Würfelspieler mit einem Würfel mit m Augen beide die gleiche Zahl werfen.

Eine weitere Verminderung dieser Wahrscheinlichkeit kann durch ein Zweifrequenzverfahren oder ein Mehrfrequenzverfahren erreicht werden. Hier wird das Relais auf ein Funkfrequenzpaar oder Frequenztupel sensibilisiert.

Dies kann in einfacher Weise bei einer Frequenzmodulation bzw. Frequenzumtastung der Funksignale angewendet werden. Die Demodulation der Funksignale könnte im Rahmen einer Koinzidenzdemodulation stattfinden. Bei Sensibilisierung auf ein Funkfrequenzpaar könnten die verwendeten Funkfrequenzen bei der Sendeübertragung aus den vorhandenen Funkfrequenzen der Funkkanäle beliebig oder determiniert gepaart werden. Die obere Grenze der momentanen Wahrscheinlichkeit $W_2$ für das Übersprechen von Funkverbindungen ist dann:

$$W_2 = 3np \, (2/m(m\text{-}1))^2,$$

wobei m die Anzahl an vorhandenen Funkfrequenzkanälen, n die Anzahl der Relais im Funkpfad und p die Anzahl der parallelen Übertragungsmöglichkeiten eines Relais sind. Dabei ist das Modell eines kartesischen Gitters benutzt.

Das Übersprechen durch Funkaufrufe aus Funkkontaktaufnahmen zur Erzeugung der eigentlichen Funkverbindung kann durch eine weitere Modulationsdifferenzierung vermieden werden. Die Funkkontaktaufnahme, die wie oben erwähnt nicht im F3T-Modus erfolgt, wird mittels amplitudenmodulierter bzw. amplitudengetasteter Signale durchgeführt. Dies entspricht einer Frequenzmodulation bzw. Frequenzumtastung von Frequenzpaaren mit einer Frequenz v = 0. Solche Frequenzpaare werden im F3T-Modus von den Relais aufgrund der Koinzidenzdemodulation ignoriert und können deshalb nicht übersprechen.

Damit ist ein Übersprechen nur noch bei aufgeschalteten sich kreuzenden oder berührenden Funkpfaden möglich, die am Kreuzungspunkt lokal mit dem gleichen Frequenztupel des Frequenzwahlzyklus arbeiten. Mit m = 256 Duplexfrequenzkanälen und 100 Übertragern im Funkpfad und 4 parallelen Übertragungsmöglichkeiten jedes einzelnen Relais ist unter einer Sendeleistungsanpassung die Übersprechwahrscheinlichkeit für eine Funkverbindung im modulationsdifferenzierten zyklischen F3T-Modus kleiner als $W_2 = 1{,}1 \times 10^{-6}$.

Die oben erwähnte Amplitudentastung im Rahmen der Funkkontaktaufnahme hat den weiteren Vorteil der Energieeinsparung bei den Funkrelais, da hier nur für positive Informationsbits der digitalen Funksignale Sendeleistung erzeugt wird. Die Informationspakete in aufgeschalteten Funkverbindungen können andererseits mit der erheblich störsicheren Frequenzmodulation übertragen werden.

Bei einer Funkpfadoptimierung, z.B. bei einer Verminderung bzw. Vermehrung der Übertragerzahl, muß der Frequenzzyklus wieder angepaßt werden. Dabei können sich die einzelnen Relais nach einer übermittelten Variablen im Funkprotokoll richten, die die Frequenztupelwahl für das nächste informationspaket angibt.

Bei dem erfindungsgemäßen Verfahren ist wesentlich, daß die Übertragungsrelais die Nutzinforamtion bzw. den Informationsteil für den Informationsempfänger zeitlich getrennt von den dazugehörigen Übertragungs- oder Steuerprotokollen oder Steueranweisungen übertragen. Hierbei könnte insbesondere eine Informationsverarbeitung wie bspw. eine Zieladressenänderung oder eine Fehlerprüfung oder -korrektur der zu übertragenden Information bei den Übertragungsrelais zeitlich getrennt von der Übertragung der Information durchgeführt werden.

Im Hinblick auf eine besonders einfache und wirkungsvolle Fehlerprüfung bzw. Fehlerkorrektur könnte die Übertragung der Information in jede Übertragungsrichtung von den in gegenseitigem Funkkontakt stehenden vorhergehenden Übertragungsrelais beobachtet bzw. geprüft und bei Auftreten eines Fehlers korrigiert werden. Eine genauere Beschreibung einer derartigen Fehlerprüfung ist im Rahmen der Beschreibung eines Ausführungsbeispiels des erfindungsgemäßen Verfahrens gegeben.

Das erfindungsgemäße Verfahren minimiert die Relaisverzögerungen in einem Funkrelaisnetz auf solche minimalen Zeitdauern, daß mehrere 100 Relais in einer Funkverbindung in einem Funkrelaisnetz zwischengeschaltet werden können. Dadurch werden große flächendeckende Relaisfunknetze zu Telekommunikationszwecken ermöglicht, in denen Informationsübertragungen mit mindestens einer gleich großen Übertragungsgeschwindigkeit erreicht werden, wie sie in bisherigen Kabelnetzwerken oder Glasfasernetzwerken verwirklicht sind.

Zum besseren Verständnis des erfindungsgemäßen Verfahrens zur Übertragung von Information in Form digital kodierter Funksignale wird das Verfahren im folgenden anhand eines Ausführungsbeispiels ausführlich erläutert:

Bei dem erfindungsgemäßen Verfahren handelt es sich um ein schnelles und störungsfreies Übertragungsverfahren von Nutzinformation innerhalb einer Funkverbindung bzw. innerhalb einer Funkverbindungskette von ggf. sehr vielen Übertragungsrelais. Die Aufnahme der Funkverbindung (Routing) ist nicht Gegenstand der Erfindung und der folgenden Beschreibung. Die Funkverbindung wird als geschlossen und bestehend vorausgesetzt.

Bei einer Vielfachübertragung über Funkrelais bestehen folgende Probleme und Anforderungen:

1. Jedes Relais erzeugt eine Zeitverzögerung bei einem als Relais-Hop bezeichneten Übertragungsvorgang, welche minimiert werden muß, um Echtzeitübertragungen wie bspw. Sprachübertragungen durchführen zu können.

2. Durch Störungen verursachte Übertragungsfehler bei der Funkübertragung häufen sich bei einer Vielfachübertragung stark an. Diese Übertragungsfehler müssen vermieden oder korrigierbar werden.

EP 0 898 818 B1

Diese Probleme eine Vielfachrelaisübertragung bzw. einer Multihop-Übertragung werden durch die Erfindung insgesamt gelöst.

Zur Minimierung der Relaisübertragungs- bzw. Relaisreaktionszeit muß auf die zeitaufwendige Zwischenspeicherung von langen übertragenen Informationssätzen (strings) und die interne Fehleranalyse und Fehlerkorrektur vor der eigentlichen Übertragung der Information verzichtet werden. Dies wird durch eine Einimpulsbzw. Einbitübertragung im Rahmen einer digitalen Informationsübertragung begünstigt. Der Zwischenspeicherungsaufwand ist dann denkbar minimal, da er nur einen Funksendeimpuls umfaßt. Folglich kann bei der Transmission über das Relais auf eine Fehleranalyse und Fehlerkorrektur verzichtet werden.

Die Einimpulsübertragung weist verschiedene weitere Vorteile auf. Ein einzelnes zu übertragendes Bit kann bei der Übertragung nicht durch Funkinterferenz zerstört werden. Dies steht im Gegensatz zu Informations-Strings, die eine große Anzahl von Funksendeimpulsen umfassen und dabei ein kompliziertes Impulsmuster aufweisen. Ein derartiges Muster kann durch Interferenz wesentlich deformiert und gestört werden.

Die Einbitübertragung vermeidet weiterhin die Überlagerungsstörung, die durch eine Mehrwegeausbreitung mit Laufzeitunterschieden verursacht wird. Wenn vereinbarungsgemäß nur ein Funksendeimpuls als Informationseinheit übertragen wird, können weitere gleiche Impulse, die im gleichen Empfangskanal eintreffen und aus anderen Funkverbindungen oder aus einer Mehrwegeausbreitung der gleichen Funkverbindung stammen, ignoriert werden. Bei der herkömmlichen Übertragung können Informations-Strings, die zeitlich versetzt überlagern, auch ohne Interferenzerscheinung nicht entflochten werden und liefern dann eine fehlerhafte Information.

Eine Fehlerübertragung wird weiter dadurch vermieden, daß jedes Übertragungsrelais, das ein digitales Informationsbit gesendet hat, die Weitersendung des Informationsgehaltes dieses Bits durch das nachfolgende Übertragungsrelais kontrolliert. Dies ist möglich, da die beiden beteiligten Übertragungsrelais in gegenseitiger Funkreichweite stehen.

Falls ein Fehler von einem nachfolgenden Übertragungsrelais erzeugt und weitergesendet wird, dann kann dieser Fehler vom beobachtenden ersten Übertragungsrelais erkannt und durch ein folgendes nachgesendetes Fehlerbit, welches ebenfalls weiterübertragen wird, markiert werden. Das nachfolgende Übertragungsrelais kann dann Fehler bzw. Bits, denen ein Fehlerbit folgt, als falsch erkennen und ignorieren. Dieses Verfahren schließt eine Fehlerübertragung und eine Fehleranhäufung innerhalb der Funkverbindungskette über die Übertragungsrelais aus.

Zur Lösung der unter 1. und 2. beschriebenen Problematik wird also eine Einbitübertragung verwendet. Jedoch können einzelne gleichartige Funksendeimpulse, die alle auf der gleichen Trägerfrequenz gesendet werden, in einer digitalen Informationsübertragung keine Informationsdifferenzierung bewirken. Zur Informationsdifferenzierung innerhalb der Informationsübertragung müssen weitere Eigenschaften der Funksendeimpulse herangezogen werden, um differenzierte Informationsbits, bspw. binäre Informationsbits und Steuerbits, Fehlerbits, Blindbits, Synchronisationsbits usw., darstellen zu können.

Dies könnte durch eine unterschiedliche Impulsform, bspw. hinsichtlich der Impulshöhe oder der Impulsdauer von Funksendeimpulsen bzw. Funksendeimpulsgruppen, erfolgen. Als Beispiel ist hier die Morsefunkübertragung mit impulsfolgen von langen und kurzen Impulsen für einzelne Informationszeichen bekannt.

Des weiteren könnte hierzu die absolute oder relative zeitliche Lage von gleichartigen Funksendeimpulsen bzgl. eines Zeitereignisses wie z.B. eines Synchronisationsimpulses oder eines vorhergehenden Funksendeimpulses bzw. vorhergehender Impulsgruppen verwendet werden. Als Beispiel ist hier die einfache binäre Pulskodemodulationsübertragung bekannt.

Schließlich könnte hierzu auch eine Trägerfrequenzdifferenzierung der Funksendeimpulse gewählt werden. Hierbei werden unterschiedliche digitale Informationsbits durch unterschiedliche Funkfrequenzen oder Frequenzphasenlagen der Funksendeimpulse gekennzeichnet. Als Beispiel hierfür ist das Telefonmehrfrequenzwahlverfahren bekannt.

Bei allen bekannten Anwendungen der oben beschriebenen Verfahren werden aber immer zeitliche Impulsfolgen (strings) mit mindestens zwei oder mehreren zeitlich aufeinanderfolgenden Einzelimpulsen in einem bestimmten Zeitintervall als Informationseinheit, bspw. als logisches Binärbit, benutzt. Da mehrere Funksendeimpulse eine Informationseinheit bilden, müssen sie zur Differenzierung von anderen Einheiten zeitlich unterschieden werden können. Dies geschieht durch eine Synchronisation, also durch eine bestimmte zeitliche Beziehung zu einem Zeitereignis wie z.B. zu einem bestimmten Funksendeimpuls oder einer Funksendeimpulsgruppe bzw. zu einem Informationsbit (Synchronisationsbit).

Bei der Erfindung werden hingegen tatsächlich einzelne Funksendeimpulse als vollständige Informationseinheit bzw. als ein logisches Informationsbit eingesetzt, deren absolute zeitliche Lage innerhalb einer Funksendeimpulsgruppe bzw. Bitgruppe keine Bedeutung für die Informationsübertragung hat. Es wird hierbei auf jegliche Synchronisation der Funksendeimpulse verzichtet.

Die Informationsdifferenzierung bzw. Bitdifferenzierung erfolgt innerhalb der Informationsübertragung durch einen Differenzenkode im Rahmen einer Frequenzkodierung. Jedes Übertragsungsrelais umfaßt hierfür eine abgespeicherte Trägerfrequenztabelle und ein abgespeichertes Frequenzauswahlverfahren. Beides, sowohl die Tabelle mit einer festgelegten Reihenfolge der unterschiedlichen zu verwendenden Trägerfrequenzen als auch die Auswahlregeln, nach denen eine Übertragungsfrequenz aus dieser Tabelle gewählt und verwendet wird, sind allen Übertragungsrelais einer bestimmten Gruppe von Übertragungsrelais in gleicher Weise eingeprägt.

Die technische Realisierung erfolgt dabei über die Implementierung von elektronischen Speichern und Mikroprozessoren in die Übertragungsrelais, in welchen die erforderliche Frequenztabelle und das Auswahlverfahren veränderbar bzw. programmierbar gespeichert sind und in welchen die prozessuale Verarbeitung bzw. Auswahl durchgeführt wird.

Bei der Vielfachübertragung von Übertragungsrelais zu Übertragungsrelais muß ein zu übertragender Funksignalimpuls nach dem Funkempfang im Relais frequenzmäßig umgesetzt werden, um sofort bzw. simultan weitergesendet werden zu können. Die frequenzmäßige Umsetzung verhindert, daß die ggf. hohe Sendeausgangsleistung der Senderendstufe des Relais auf die ggf. noch (simultan) offene empfindliche Empfangseingangsstufe des gleichen Frequenzkanals überspricht und diese übersteuert oder ggf. sogar zerstört.

Die logische Information wird bei diesem Frequenzumsetzen sogleich übertragen, indem vom Sender ganz bestimmte Frequenzen, ausgehend von einer zwischen den Übertragungsrelais vereinbarten Startsignalfrequenz, für die unterschiedlichen Informationsbits gewählt werden.

Zur Veranschaulichung der Frequenzumsetzung sei auf die an das Ende der Beschreibung angefügte Tabelle verwiesen.

Die Übertragung von Nutzinformation beginnt mit der Übertragung des Startsendeimpulstupels aus drei bestimmten Trägerfrequenzen. Diese Trägerfrequenzen werden von Relais zu Relais bei der Übertragung immer wieder willkürlich oder determiniert gewechselt. Die Trägerfrequenzen des Startsignals dienen zugleich jedem Übertragungsrelais, um eine Ausgangsposition auf seiner Frequenztabelle für die weitere Übertragung festzulegen. Jedes Übertragungsrelais sowie der Quellensender und der Zielempfänger registrieren ebenfalls die Frequenzen des von ihrem Zielübertragungsrelais weitergesandten Startsignals. Sie können deshalb die Funkübertragung ihrer Zielübertragungsrelais im weiteren Verlauf kontrollieren.

Ein Übertragungsrelais, das sein Startsignal erhalten und weitergegeben hat, wartet nun auf die Übertragung der Nutzinformation. Es erwartet einen von verschiedenen möglichen Funksendeimpulsen mit vorbestimmten Trägerfrequenzen. Nur für diese vorbestimmten Funksignale hält er die bestimmten Funkempfangskanäle offen. Die Zahl der möglichen verschiedenfrequenten Funksignale entspricht der Zahl der für die Informationsübertragung erforderlichen unterschiedlichen Informationsbits. Falls bspw. für die Informationsübertragung zwei binäre logische Bits und ein Steuerbit benötigt werden, so werden drei verschiedene Trägerfrequenzen für die Funksendeimpulse verwendet.

Das Übertragungsrelais erhält nun das erste Nutzinformationsbit in einem seiner vorbestimmten Empfangskanäle mit den bestimmten Sendefrequenzen. Welche Empfangskanäle es offenhält, legt es nach der bestimmten Auswahlregel bzw. dem bestimmten Auswahlverfahren fest. Diese Auswahlregel ist jedem beteiligten Funknetzteilnehmer bekannt. Sie ist den Übertragungsrelais durch die erwähnten Speicher und Mikroprozessoren programmierbar implementiert.

Die Auswahlregel bzgl. des Beispiels könnte folgendermaßen sein. Es sollen nur die Eingangskanäle zum Empfang offengehalten werden, deren Empfangsfrequenzen auf der implementierten Frequenztabelle zwei, drei und sieben Positionen von der Ausgangsposition in eine bestimmte Richtung gezählt liegen. Wird ein Signal im Empfangskanal mit der Frequenzposition -2 empfangen, so liegt ein Informationsbit "logisch 0" vor. Wird in Frequenzposition 3 empfangen, so liegt ein Informationsbit "logisch 1" und wird bei Position 7 empfangen, so liegt das "Steuerbit" vor.

Das Übertragungsrelais kann so das erhaltene Funksignal einem Informationsbit zuordnen und kann dieses weitersenden. Es kennt das Übertragungsverfahren und sendet ein Funksignal, das es frequenzmäßig um soviele Positionen auf der internen Frequenztabelle umgesetzt hat, wie es die tabellarisch festgelegte Auswahlregel für das zu sendende Informationsbit bestimmt hat. Als Ausgangsposition für die Frequenzumsetzung benutzt es die Position des letzten von ihm weitergesendeten Funksignals. Der nächste Empfänger des Funksignals erwartet dieses Signal wieder in den drei möglichen weitergezählten Frequenzpositionen, ausgehend von der Position seines letzten erhaltenen Empfangssignals.

Dieses Verfahren, die Information eines Sendeimpulses oder eines Empfangsimpulses durch Differenzpositionen der Trägerfrequenzen in einer Frequenztabelle zu verschlüsseln oder zu rekonstruieren, kann gleichzeitig als ein Verschlüsselungsverfahren an sich angewendet werden. Der Vorteil hierbei ist, daß die Frequenzumsetzung aus funktechnischer Sicht wie beschrieben sehr günstig ist. Durch das Frequenzumsetzungsverfahren kann in einfacher Weise eine ausreichende Verschlüsselung der Übertragungsinformation erreicht werden, ohne zusätzliche Prozeßschritte zur Verschlüsselung durchführen zu müssen. Dies reduziert den Hardwareaufwand bei der Realisierung des Übertragungsverfahrens erheblich.

Solange einem Dritten die Frequenztabelle und die Positionsverschieberegel nicht bekannt ist, kann er aus dem reinen Funkempfang keine Information über die Verschlüsselung gewinnen. Alle verwendeten Informationsbits treten in der Funkübertragung absolut symmetrisch auf, d.h. es ist nicht erkennbar, um welches Informationsbit es sich handeln kann, da die Frequenztabelle zyklisch durchlaufen wird und für unterschiedliche Informationsbits nacheinander gleichfrequente und gleichartige Funksendeimpulse auftreten können.

Selbst wenn der Text der Übertragung bekannt sein sollte, ist es nicht möglich, die Funksendeimpulse in ihrer zeitlichen Sendeabfolge den Textbuchstaben zuzuordnen, da es keine festlegbare Relation zwischen der Textzeichenanzahl und der Funksendeimpulsanzahl geben muß. Dies kann dadurch erreicht werden, daß ein Übertragungsrelais nach der Übertragung eines Informationsbits in stochastischer Entscheidungsweise diesem Bit ein informationsmäßig bedeutungsloses aber dennoch reguläres "Blindbit" folgen läßt oder das nächste Informationsbit überträgt. Fehlerbits haben diesbezüglich die gleiche verschlüsselnde Wirkung wie Blindbits.

In einem Funkrelaisnetzwerk muß ggf. mit einer großen Anzahl an Relais und erheblichem Telekommunikationsverkehr in der Nachbarschaft eines Zielrelais gerechnet werden. Da für jede Funkverbindung immer stückweise zwischen zwei Relais sowohl in Vorwärts- als auch in Rückwärtsrichtung zumindest zwei verschiedene Funkfrequenzkanäle vereinbart werden, kann dies zu einem hohen Bedarf an Frequenzkanälen bzw. Frequenzbandbreite führen.

Es kommt hinzu, daß alle Relais in einer Nachbarschaft die Frequenzkanäle unabhängig voneinander vereinbaren können. Somit ist die Gefahr gegeben, daß in zwei unabhängigen Funkverbindungen, die sich räumlich sehr nahe kommen, die gleichen Frequenzkanäle verwendet werden. Dies kann zu einem Übersprechen zwischen den beiden Funkverbindungen führen.

Um diese Gleichkanalstörung zu unterdrücken, muß das Frequenzkanalraster möglichst gespreizt werden, damit die Wahrscheinlichkeit für Gleichkanalstörungen minimiert ist. Dies wird dadurch erreicht, daß tatsächlich zwischen zwei Relais mehrere Funksendeimpulse mit unterschiedlichen Frequenzen als ein Informationsbit ausgetauscht werden. Diese Funkfrequenzen bilden je nach der verwendeten Anzahl Funkfrequenztupel. Ein Relais erwartet daher nicht das Eintreffen eines bestimmten Funksendeeinzelimpulses, sondern eines Tupels von Funksendeimpulsen mit unterschiedlichen Trägerfrequenzen.

Die einzelnen Funksendeimpulse eines Frequenztupels können gleichzeitig oder in einem bestimmten Zeitintervall gesendet werden. Der Empfänger erwartet umgekehrt die Einzelimpulse koinzident oder in einem bestimmten Zeitintervall. Durch diese Koinzidenzdemodulation kann das Übersprechen zwischen Funkverbindungen weitgehend unterdrückt werden, da eine große Anzahl an Frequenzkombinationen bzw. unterschiedlichen Frequenztupeln erzeugt werden kann.

Die notwendige Anzahl unabhängiger Einzelfrequenzen, die für eine hohe und zunehmende Störunterdrükkung im Funknetz benötigt wird, steigt dabei weniger stark, so daß die notwendige Frequenzkanalanzahl bzw. Frequenzbandbreite für die Übertragung im Funknetz relativ beschränkt gehalten werden kann. Die Anzahl der erforderlichen Frequenzkanäle und der Rang der Frequenztupel sowie die Funksendeimpulsdauer und die verwendeten Zeitfenster der Koinzidenzdemodulation können in Computersimulationen für ein Funknetzwerk bestimmt und optimiert werden.

Zusammenfassend sei bemerkt, daß bei dem beschriebenen Übertragungsverfahren in der Anwendung erstmals eine frequenzparallele Übertragung einzelner Informationsbits mit einer Koinzidenzdemodulation beim Empfänger angewendet wird, bei der die differenzierte Bitinformation durch Positionsdifferenzen in Frequenztupeltabellen mit Hilfe von bestimmten Auswahlverfahren festgelegt wird. Sowohl die Frequenztabelle als auch das Auswahlverfahren sind jedem Funknetzrelais programmierbar implementiert. Dieses Übertragungsverfahren gewährleistet eine maximal schnelle und sehr störsichere Informationsübertragung in Vielfachrelaisfunknetzwerken. Die Funksignale weisen im Rahmen ihrer Frequenzkodierung in Frequenztupel sowohl einen Informationsteil als auch einen Protokollteil auf, wobei der Protokollteil im Umfange des Startsignals in Zusammenwirkung mit der Frequenztabelle für die korrekte Übertragung der logischen Informationsbits - 0 oder 1-verantwortlich ist.

EP 0 898 818 B1

|  | | SENDER | | | RELAIS | | | RELAIS ODER EMPFÄNGER | | | | |
|---|---|---|---|---|---|---|---|---|---|---|---|---|
| 0 | | ⟶ bronce | orange | yellow ⟶ | bronce | orange | yellow | bronce | orange | yellow | | |
|  | Δ = -2 | white | lilac | brown | white | lilac | brown | white | lilac | brown | | |
| START | | ⟶ red | pink | orange ⟶ | red | pink | orange | red | pink | orange | | |
|  | | green | black | pink | green | black | pink | green | black | pink | | |
|  | Δ = 3 | yellow | turqaise | turqaise | yellow | turqaise | turqaise | yellow | turqaise | turqaise | | |
| 1 | | ⟶ blue | gold | silver ⟶ | blue | gold | silver | blue | gold | silver | | |
|  | Δ = 7 | brown orange | silver bronce | grey transparent | brown orange | silver bronce | grey transparent | brown orange | silver bronce | grey transparent | ⟶ | START |
|  | | lilac | grey | white | lilac | grey | white | lilac | grey | white | Δ = 3 | |
| ERROR | | ⟶ pink | blond | green | pink | blond | green | pink | blond | green | ⟶ | 1 |
|  | | black | transparent | red | black | transparent | red | black | transparent | red | | |
|  | | turqaise | white | blue | turqaise | white | blue | turqaise | white | blue | | |
|  | | gold | red | lilac | gold | red | lilac | gold | red | lilac | | |
|  | | grey silver | green yellow | black gold | grey silver | green yellow | black gold | grey silver | green yellow | black gold | | |
|  | | blond | blue | bronce | blond | blue | bronce | blond | blue | bronce | | |
|  | | transparent | brown | blond | transparent | brown | blond | transparent | brown | blond | | |

**Patentansprüche**

1. Verfahren zur Übertragung von Information in Form digital kodierter Funksignale, die einen Informationsteil und einen Protokollteil umfassen, mit Hilfe von Übertragungsrelais, innerhalb eines Funknetzes, wobei die Übertragungsrelais Mittel zur Bearbeitung des Protokollteils aufweisen, **dadurch gekennzeichnet, daß** die Übertragung des Informationsteils eines Funksignals vor, während oder zeitgleich mit der Bearbeitung des Protokollteils des Funksignals in demselben Übertragungsrelais begonnen wird, wobei die Übertragung der Information bitweise erfolgt und jedem Informationsbit ein Frequenztupel zugeordnet wird.

2. Verfahren nach Anspruch 1, **dadurch gekennzeichnet, daß** die für die Übertragung der Information erforderliche Funkverbindung bereits vor der Übertragung aufgebaut wird.

3. Verfahren nach Anspruch 1 oder 2, **dadurch gekennzeichnet, daß** die Frequenztupel n-tupel sind, wobei vorzugsweise einzelne Frequenzen der Frequenztupel gleich Null sind und/oder vorzugsweise zwei oder mehrere Frequenzen innerhalb der Frequenztupel gleich sind.

4. Verfahren nach einem der Ansprüche 1 bis 3, **dadurch gekennzeichnet, daß** als Frequenzen Funkträgerfrequenzen für die Funksignale verwendet werden.

5. Verfahren nach einem der Ansprüche 1 bis 4, **dadurch gekennzeichnet, daß** die Kodierung und/oder die Kodierungsform und/oder das Tastverfahren der einen oder mehreren Funkträgerfrequenzen während der Dauer einer Funkverbindung in verschiedenen Funkverbindungsphasen verändert werden kann, wobei die Veränderung der Kodierung vorzugsweise die Frequenzkodierung betrifft.

6. Verfahren nach einem der Ansprüche 1 bis 5, **dadurch gekennzeichnet, daß** jedes Informationsbit nach seiner Integration bei dem Übertragungsrelais frequenzmäßig umgesetzt und unverzüglich weitergesendet wird.

7. Verfahren nach einem der Ansprüche 1 bis 6, **dadurch gekennzeichnet, daß** die Frequenzkodierung zur Identifikation und Adressierung der Information und/oder zur Identifikation des Übertragungskanals und/oder zur Verschlüsselung der zu übertragenden Information verwendet wird.

8. Verfahren nach einem der Ansprüche 1 bis 7, **dadurch gekennzeichnet, daß** einzelne Frequenzimpulse der Frequenztupel in einer vorgebbaren zeitlichen Abfolge innerhalb vorgebbarer Zeitfenster und/oder koinzident in einem vorgebbaren Zeitbereich beim Übertragungsrelais und/oder beim Informationsempfänger erwartet werden.

9. Verfahren nach einem der Ansprüche 1 bis 8, **dadurch gekennzeichnet, daß** eines oder mehrere der für eine bestimmte Funkverbindung ausgewählten Übertragungsrelais und/oder der Informationsempfänger das Eintreffen der frequenzkodierten Information in vorgebbaren Empfangsfrequenzkanälen erwarten.

10. Verfahren nach einem der Ansprüche 1 bis 9, **dadurch gekennzeichnet, daß** die erwarteten Frequenztupel der Funksignale für einen erneuten Empfang im Verlauf der Funksignalübertragung und/oder die Frequenzen der Frequenztupel nach einem vorgebbaren Verfahren gewechselt werden, wobei das Wechselverfahren vorzugsweise ein zyklisches Verfahren ist.

11. Verfahren nach Anspruch 10, **dadurch gekennzeichnet, daß** das Wechselverfahren gemäß einer den Relais und dem Informationsempfänger zugeordneten Frequenztabelle durchgeführt wird und/oder daß das Wechselverfahren für jedes Übertragungsrelais einer vorgebbaren Anzahl von Übertragungsrelais oder einer bestimmten Gruppe von Übertragungsrelais gleich ist.

12. Verfahren nach Anspruch 10 oder 11, **dadurch gekennzeichnet, daß** die vorbestimmten Frequenztupel für jedes Relais einer bestimmten Zahl von Relais oder einer bestimmten Gruppe von Relais aus einem anderen Frequenztupelwahlverfahren oder einem anderen Zyklusbereich des Frequenztupelwahlverfahrens stammen.

13. Verfahren nach einem der Ansprüche 10 bis 12, **dadurch gekennzeichnet, daß** die Relais, die die empfangene Information weitergeben, die empfangenen Funksignale mit gewechselten Frequenztupeln weitergeben und/oder daß das Wechselverfahren der Frequenztupel zum Senden wie zum Empfangen für die entsprechenden Relaisgruppen das gleiche ist.

**14.** Verfahren nach einem der Ansprüche 1 bis 13, **dadurch gekennzeichnet, daß** die Übertragungsrelais den Informationsteil für den Informationsempfänger zeitlich getrennt von den dazugehörigen Übertragungs- oder Steuerprotokollen oder Steueranweisungen übertragen.

**15.** Verfahren nach einem der Ansprüche 1 bis 14, **dadurch gekennzeichnet, daß** eine Informationsverarbeitung, wie bspw. eine Zieladressenänderung oder eine Fehlerprüfung oder -korrektur der zu übertragenden Information bei den Übertragungsrelais, zeitlich getrennt von der Übertragung der Information durchgeführt wird.

**16.** Verfahren nach einem der Ansprüche 1 bis 15, **dadurch gekennzeichnet, daß** die Übertragung der Information in jede Übertragungsrichtung von den in gegenseitigem Funkkontakt stehenden vorhergehenden Übertragungsrelais geprüft und bei Auftreten eines Fehlers korrigiert wird.

**Claims**

**1.** Method for transmitting data in the form of digitally coded radio signals, which include an information component and a protocol component, by means of transmission relays within a radio network, wherein the transmission relays comprise means for processing the protocol component,
**characterised in that** the transmission of the information component of a radio signal is commenced before, during or synchronously with the processing of the protocol component of the radio signal in the same transmission relay, the transmission of the data being effected bit-by-bit and each information bit being assigned a frequency-tuple.

**2.** Method according to Claim 1, **characterised in that** the radio link required for the transmission of data is set up before the transmission.

**3.** Method according to Claim 1 or 2, **characterised in that** the frequency-tuples are n-tuple, individual frequencies of the frequency-tuples preferably being equal to zero and/or preferably equal to two or more frequencies within the frequency-tuples.

**4.** Method according to any one of Claims 1 to 3, **characterised in that** radio carrier frequencies are used as frequencies for the radio signals.

**5.** Method according to any one of Claims 1 to 4, **characterised in that** the coding and/or the coding form and/or the keying process of the one or more radio carrier frequencies can be changed throughout the duration of a radio link in different radio link phases, the change in the coding preferably relating to the frequency coding.

**6.** Method according to any one of Claims 1 to 5, **characterised in that**, after its integration at the transmission relay, each information bit is subjected to frequency conversion and immediately forwarded.

**7.** Method according to any one of Claims 1 to 6, **characterised in that** the frequency coding is used for identification and addressing of the data and/or for identification of the transmission channel and/or for encryption of the data to be transmitted.

**8.** Method according to any one of Claims 1 to 7, **characterised in that** individual frequency pulses of the frequency-tuples are expected in a pre-selectable time sequence within pre-selectable time windows and/or simultaneously in a pre-selectable time range at the transmission relay and/or at the data receiver.

**9.** Method according to any one of Claims 1 to 8, **characterised in that** one or more of the transmission relays and/or of the data receivers selected for a specific radio link expect the arrival of the frequency-coded data in pre-selectable receive frequency channels.

**10.** Method according to any one of Claims 1 to 9, **characterised in that** the expected frequency-tuples of the radio signals for a new reception in the course of the radio signal transmission and/or the frequencies of the frequency-tuples are changed according a pre-selectable process, the change process preferably being a cyclic process.

**11.** Method according to Claim 10, **characterised in that** the change process is carried out in accordance with a frequency table associated with the relays and the data receiver and/or the change process for each transmission relay of a pre-selectable number of transmission relays or a specific group of transmission relays is the same.

12. Method according to Claim 10 or 11, **characterised in that** the predetermined frequency-tuples for each relay of a specific number of relays or a specific group of relays come from a different frequency-tuple selection process or a different cycle range of the frequency division selection process.

13. Method according to any one of Claims 10 to 12, **characterised in that** the relays, which forward the received data, forward the received radio signals with changed frequency-tuples and/or **in that** the change process of the frequency-tuples for sending and for receiving is the same for the corresponding relay groups.

14. Method according to any one of Claims 1 to 13, **characterised in that** the transmission relays transmit the data component for the data receiver separately in time from the associated communications or control protocols or control instructions.

15. Method according to any one of Claims 1 to 14, **characterised in that** a data processing, such as, for example, a destination address change or an error check or error correction of the data to be transmitted at the transmission relay, is carried out separately in time from the transmission of data.

16. Method according to any one of Claims 1 to 15, **characterised in that** the transmission of data is monitored in each transmission direction by the preceding transmission relays in mutual radio contact, and on occurrence of an error is corrected.

**Revendications**

1. Procédé de transmission d'informations sous forme de signaux radio codés en numérique qui comprennent une partie information et une partie protocole, à l'aide de relais de transmission, à l'intérieur d'un réseau radio, les relais de transmission présentant des moyens de traitement de la partie protocole,
   **caractérisé en ce que** la transmission de la partie information d'un signal radio est commencée avant, pendant ou isochroniquement avec le traitement de la partie protocole du signal radio dans le même relais de transmission, la transmission des informations ayant lieu par bits et une série ordonnée de fréquences étant adjointe à chaque bit d'information.

2. Procédé selon la revendication 1,
   **caractérisé en ce que** la liaison radio nécessaire à la transmission des informations est constituée déjà avant la transmission.

3. Procédé selon la revendication 1 ou 2,
   **caractérisé en ce que** les séries ordonnées de fréquences sont des séries ordonnées n, des fréquences individuelles des séries ordonnées de fréquences étant de préférence égales à zéro et/ou deux fréquences ou plus à l'intérieur des séries ordonnées de fréquences étant de préférence égales.

4. Procédé selon l'une des revendications 1 à 3,
   **caractérisé en ce qu'**on utilise en tant que fréquences des fréquences porteuses radio pour les signaux radio.

5. Procédé selon l'une des revendications 1 à 4,
   **caractérisé en ce que** le codage et/ou la forme de codage et/ou le procédé de manipulation d'une ou plusieurs des fréquences porteuses peuvent être modifiés pendant la durée d'une liaison radio en plusieurs phases de liaison radio différentes, la modification du codage concernant de préférence le codage de fréquence.

6. Procédé selon l'une des revendications 1 à 5,
   **caractérisé en ce que** chaque bit d'information, après son intégration dans le relais de transmission, est converti en fréquence et immédiatement retransmis.

7. Procédé selon l'une des revendications 1 à 6,
   **caractérisé en ce que** le codage de fréquence est utilisé pour l'identification et l'adressage des informations et/ou pour l'identification du canal de transmission et/ou pour le codage des informations à transmettre.

**8.** Procédé selon l'une des revendications 1 à 7,
**caractérisé en ce que** des impulsions de fréquence individuelles des séries ordonnées de fréquences sont attendues dans une succession chronologique prédéfinissable à l'intérieur de lucarnes de temps prédéfinissables et/ou en coïncidence dans une plage de temps prédéfinissable dans le relais de transmission et/ou dans le récepteur d'informations.

**9.** Procédé selon l'une des revendications 1 à 8,
**caractérisé en ce qu'**un ou plusieurs des relais de transmission choisis pour une liaison radio déterminée et/ou des récepteurs d'information attendent l'arrivée des informations codées en fréquence dans des canaux de fréquence de réception prédéfinissables.

**10.** Procédé selon l'une des revendications 1 à 9,
**caractérisé en ce que** les séries ordonnées de fréquences des signaux radio attendus sont alternées pour une réception renouvelée au cours de la transmission radio et/ou les séries ordonnées de fréquences sont alternées selon un procédé prédéfinissable, le procédé d'alternance étant de préférence un procédé cyclique.

**11.** Procédé selon la revendication 10,
**caractérisé en ce que** le procédé d'alternance est effectué selon un tableau de fréquences adjoint aux relais et au récepteur d'informations et/ou que le procédé d'alternance est identique pour chaque relais de transmission d'un nombre prédéfinissable de relais de transmission ou d'un groupe déterminé de relais de transmission.

**12.** Procédé selon la revendication 10 ou 11,
**caractérisé en ce que** les séries ordonnées de fréquences prédéterminées proviennent, pour chaque relais d'un nombre déterminé de relais ou d'un groupe déterminé de relais, d'un autre procédé de choix de séries ordonnées de fréquences ou d'une autre zone de cycle du procédé de choix de séries ordonnées de fréquences.

**13.** Procédé selon l'une des revendications 10 à 12,
**caractérisé en ce que** les relais qui transmettent les informations reçues transmettent les signaux radio reçus avec des séries ordonnées de fréquences alternées et/ou que le procédé d'alternance des séries ordonnées de fréquences est le même pour l'envoi et pour la réception pour les groupes de relais correspondants.

**14.** Procédé selon l'une des revendications 1 à 13,
**caractérisé en ce que** les relais de transmission transmettent la partie information pour le récepteur d'informations chronologiquement séparée des protocoles de transmission ou de commande ou des instructions de commande qui lui sont adjoints.

**15.** Procédé selon l'une des revendications 1 à 14,
**caractérisé en ce qu'**un traitement d'informations, comme par exemple une modification d'adresse de destination ou un test ou une correction de défaut des informations à transmettre par le relais de transmission est effectué chronologiquement séparé de la transmission des informations.

**16.** Procédé selon l'une des revendications 1 à 15,
**caractérisé en ce que** la transmission des informations dans chaque direction de transmission est testée par le relais de transmission précédent se trouvant en contact radio réciproque et est corrigée dans le cas de l'apparition d'une erreur.